# EUROPÄISCHE PATENTANMELDUNG

(11) **EP 0 698 649 A1**
(43) Veröffentlichungstag der Anmeldung: **28.02.1996**
(21) Anmeldenummer: 95112929.5
(22) Anmeldetag: 17.08.1995
(51) Int. Cl.: C09K 11/06, H05B 33/14, C09K 11/02, H05B 33/20, C09B 5/62

(54) **Verwendung von thermoplastisch verarbeitbaren, langzeitstabilen elektrolumineszenten Materialien**

(30) Priorität: 26.08.1994 DE 4430288
(71) Anmelder: BASF AKTIENGESELLSCHAFT, D-67056 Ludwigshafen (DE)
(72) Erfinder: Heitz, Thomas, Dr., D-67125 Dannstadt-Schauernheim (DE); Haremza, Sylke, Dr., D-69151 Neckargemünd (DE); Greiner, Andreas, Dr., D-35043 Marburg (DE)

(57) **Zusammenfassung**

Die vorliegende Erfindung betrifft die Verwendung von binären Mischungen, bestehend aus einem Fluoreszenzfarbstoff aus der Perylenreihe und einem thermoplastischen Polymeren mit einem Kristallinitätsgrad von weniger als 10 % zur Herstellung eines durch elektrische Spannung zum Leuchten anregbaren Formkörpers, einer Faser oder einer Folie.

## Beschreibung

Die vorliegende Erfindung betrifft die Verwendung von binären Mischungen, bestehend aus einem Fluoreszenzfarbstoff aus der Perylenreihe und einem thermoplastischen Polymeren mit einem Kristallinitätsgrad von weniger als 10 % zur Herstellung eines durch elektrische Spannung zum Leuchten anregbaren Formkörpers, einer Faser oder einer Folie.

Als elektrolumineszente, d.h. durch elektrische Spannung zum Leuchten anregbare organische Materialien sind u.a. niedermolekulare Fluoreszenzfarbstoffe bekannt. Diese werden in der Regel in Form von Mehrschichtenanordnungen oder eingebettet in einer inerten polymeren Matrix verwendet. Dabei wird aber stets eine niedermolekulare lochleitende (p-Leiter) Substanz mit zugesetzt, um die gewünschten Eigenschaften zu erzielen (vgl. z.B. J. Appl. Phys. 31, 108 (1992) sowie JP-A 04/212286, JP-A 04/188 597 und JP 05/320634).

Mehrschichtenanordnungen werden bisher in der Regel relativ aufwendig durch Aufdampfen der Emittermaterialien und der lochleitenden niedermolekularen Verbindungen hergestellt. Dieses Verfahren wird einerseits limitiert durch die erforderliche Verdampfbarkeit der Emittermaterialien und der lochleitenden Additive, andererseits durch die Komplexität der der Aufbringung verschiedener Schichten.

Hinzu kommt, daß Mischungen aus niedermolekularen Emittermaterialien und niedermolekularen lochleitenden Strukturen hinsichtlich der Lagerstabilität ihrer Morphologie häufig nicht in vollem Umfang zufriedenstellen können.

Niedermolekulare Materialien, eingebettet in Polymersystemen, neigen zur Migration; dieser Effekt ist bei ternären Systemen noch ausgeprägter als bei binären, was ebenfalls nachteilig für die Langzeitstabilität der Morphologie ist.

Aufgabe der vorliegenden Erfindung war es daher, elektroluminiszente thermoplastisch verarbeitbare Materialien zur Verwendung zur Herstellung von durch elektrische Spannung zum Leuchten anregbaren Bauteilen, Formkörpern, Fasern oder Folien zur Verfügung zu stellen, die einerseits nach einem einfachen Verfahren zugänglich sind und andererseits eine gute Langzeitstabilität ihrer Morphologie zeigen.

Diese Aufgabe wurde erfindungsgemäß gelöst durch die Verwendung einer binären Mischung, bestehend aus einem Fluoreszenzfarbstoff aus der Perylenreihe und einem thermoplastischen Polymeren mit einem Kristallinitätsgrad von weniger als 10 % zur Herstellung eines durch elektrische Spannung zum Leuchten anregbaren Formkörpers, einer Faser oder einer Folie.

Als Fluoreszenzfarbstoffe aus der Perylenreihe eignen sich allgemein solche, die auf der Perylentetracarbonsäure, dem Benzanthron, dem Dibenzanthron oder dem Isodibenzanthron (Isoviolanthron) aufbauen.

Entsprechende Produkte sind dem Fachmann bekannt und in der Literatur beschrieben.

Besonders bevorzugt sind Fluoreszenzfarbstoffe der allgemeinen Formel I bis III 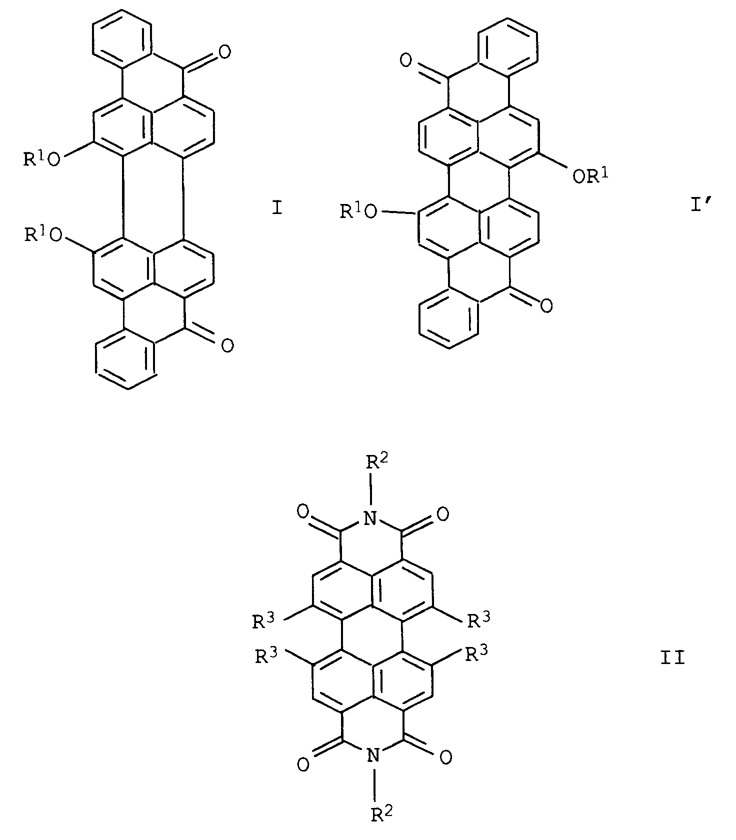 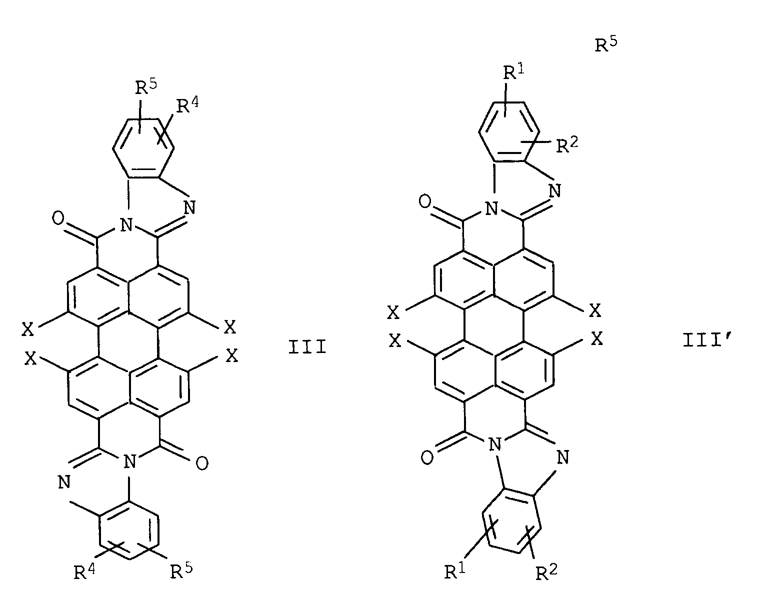
wobei
- R¹: C₁-C₁₃-Alkyl, C₁-C₁₃-Acyl, oder SO₂R mit R=Phenyl- oder mit C₁-C₁₃-Alkyl subst. Phenyl
- R²: C₅-C₂₀-Alkyl, das gegebenenfalls durch ein Sauerstoffatom unterbrochen ist, oder Phenyl, das durch C₁-C₁₃-Alkyl oder C₁-C₁₃-Alkoxy ein- oder mehrfach substituiert ist,
- R³: Wasserstoff, Chlor, Phenoxy oder durch Halogen, C₁-C₄-Alkyl oder C₁-C₄-Alkoxy substituiertes Phenoxy,
- R⁴ und R⁵: unabhängig voneinander Wasserstoff, C₁-C₂₀-Alkyl-, C₁-C₂₀-Alkoxy oder Phenoxy
und
- X: Wasserstoff, Halogen oder OR⁶ bedeuten, wobei R⁶ Phenyl oder mit C₁-C₁₃-Alkyl- oder C₁-C₁₃-Alkoxy substituiertes Phenyl darstellt,
bedeuten.

Insbesondere bevorzugt sind Fluoreszenzfarbstoffe der Formel II, worin R² durch C₁-C₄-Alkyl oder C₁-C₄-Alkoxy ein- oder mehrfach substituiertes Phenyl und R⁴ Wasserstoff, Phenoxy oder Chlor bedeuten.

Weiterhin ganz besonders hervorzuheben sind Fluoreszenzfarbstoffe der Formel II, worin R² 2,6-Diisopropylphenyl und R³ Phenoxy bedeuten.

Geeignete Reste R¹ sind z.B. Methyl, Ethyl, Propyl, Isopropyl, Butyl, Isopropyl, Butyl, Isobutyl oder sec-Butyl.

Reste R² sind z.B. Pentyl, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl und Undecyl.

Reste R¹ und R² sind weiterhin z.B. Dodecyl, Tridecyl oder Isotridecyl.

Reste R² sind weiterhin z.B. Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Isopropoxypropyl, 2- oder 3-Butoxypropyl, 2- oder 3-(2-Ethylhexyloxy)propyl, 2- oder 4-Methoxybutyl, 2- oder 4-Ethoxybutyl, 2- oder 4-Propoxybutyl, 2- oder 4-Isopropoxybutyl, 2- oder 4-Butoxybutyl, 2- oder 4-(2-Ethylhexyloxy)butyl, 2-Methyl-6-isopropylphenyl, 2-Methyl-6-sec-butylphenyl, 2-Methyl-6-tert-butylphenyl, 2-Ethyl-6-isopropylphenyl, 2-Ethyl-6-sec-butylphenyl, 2-Ethyl-6-tert-butylphenyl, 2-Methylphenyl, 2,3-, 2,4-, 2,5- oder 2,6-Dimethylphenyl, 2,4,6-Trimethylphenyl, 2-Methyl-4-methoxyphenyl, 2,5-Dimethyl-4-methoxyphenyl, 2-Ethyl-phenyl, 2,6-Diethylphenyl, 2,6-Diethyl-4-methylphenyl, 2-Isopropylphenyl, 2,4-, 2,5- oder 2,6-Diisopropylphenyl, 2-n-Butylphenyl, 2-sec-Butylphenyl, 2-n-Pentylphenyl, 2-n-Hexylphenyl, 2-(2'-Methylpentyl)phenyl, 2-n-Octylphenyl, 2-Methoxyphenyl, 2-Ethoxyphenyl, 2,5-Dimethoxyphenyl, 2,5-Diethoxyphenyl, 2,4-Dimethoxyphenyl, 2,4-Diethoxyphenyl, 2,3-Dimethoxyphenyl oder 2,3-Diethoxyphenyl.

Reste R³ sind z.B. 2-, 3- oder 4-Fluorphenoxy, 2-, 3- oder 4-Chlorphenoxy, 2-, 3- oder 4-Bromphenoxy, 2-, 3- oder 4-tert-Butylphenoxy, 2-Isopropyl-4-methylphenoxy, 2,3-, 2,4-, 2,5- oder 2,6-Dichlorphenoxy, 2,4,5- oder 2,4,6-Trichlorphenoxy, 2-, 3- oder 4-Methylphenoxy, 2,3-, 2,4, 2,5-, 2,6- oder 3,5-Dimethylphenoxy, 2,5,6-Trimethylphenoxy, 2-Methyl-4-chlorphenoxy, 2-Methyl-5-chlorphenoxy, 2-Methyl-6-chlorphenoxy, 2-Ethylphenoxy, 2,6-Diethylphenoxy, 2,6-Diethyl-4-methylphenoxy, 2-Isopropylphenoxy, 3-Methyl-4-chlorphenyl, 4-Propylphenoxy, 4-Butylphenoxy, 2-, 3- oder 4-Methoxyphenoxy, 2-, 3- oder 4-Ethoxyphenoxy, 2-, 3- oder 4-Propoxyphenoxy, 2-, 3- oder 4-Isopropoxyphenoxy, 2-, 3- oder 4-Butoxyphenoxy oder 2,4-Dimethoxyphenoxy.

Hinsichtlich geeigneter Reste R⁴ und R⁵ gelten die zuvor gemachten Ausführungen für Reste R¹ und R² bzw. R³ entsprechend.

Es versteht sich, daß auch Mischungen mehrerer Fluoreszenzfarbstoffe der Formel I, II und/oder III eingesetzt werden können.

Der Anteil der Fluoreszenzfarbstoffe an den Mischungen liegt im allgemeinen im Bereich von 1 bis 50 Gew.-%, bevorzugt von 5 bis 30 Gew.-%, bezogen auf das Gesamtgewicht der Mischungen.

Als Matrix enthalten die erfindungsgemäß verwendeten Mischungen ein thermoplastisches Polymer mit einem Kristallinitätsgrad von weniger als 10 %, insbesondere von 0 bis 5 %. Besonders bevorzugt werden amorphe Polymerisate, insbesondere Polyaryl(meth)acrylate, Poly(alkyl)methacrylate, Polystyrol (einschl. Copolymeren mit vinylischen Monomeren), Polyvinylchlorid, Polyvinylether, Polyvinylester, Polyvinylpyrrolidon, Polyvinylpyridin, sowie, aus der Gruppe der Polykondensate, Polyalkylarylate z.B. Polyethylenterephthalat, Polybutylenterephthalat, Polyethylennaphthalat und Polybutylennaphthalat), Polyarylate (z.B. Polyester auf der Basis Bisphenol A/Tere- und/oder Isophthalsäure), Polycarbonate, Polyarylsulfone, Polyarylethersulfone, Polyimide, Polyetherimide und Poly(aryl)alkylsiloxane.

Als besonders vorteilhaft erwiesen haben sich in vielen Fällen Polymere aus der Gruppe der Polyalkylmethacrylate, Polyarylmethacrylate, Copolymere des Styrols mit vinylischen Monomeren, Polyvinylpyrrolidon und der Polykondensate.

Weiterhin ist es für eine Reihe von Anwendungen vorteilhaft, wenn die Glasübergangstemperatur der verwendeten Polymere oberhalb von 130°C liegt.

Als ganz besonders bevorzugte Gruppe von Polymeren sind Polykondensate mit Glasübergangstemperaturen von mehr als 130°C zu nennen.

Entsprechende Polymere sind im Handel erhältlich und in der Literatur beschrieben, so daß sich hier nähere Angaben erübrigen.

Die Herstellung der erfindungsgemäß zu verwendenden binären Mischungen kann entweder durch einfaches Mischen in der Schmelze oder aber durch Mischen in einem inerten Lösungsmittel erfolgen. Geeignete Lösungsmittel sind beispielsweise Toluol, Cyclohexan, Hexan, Octan, Dichlormethan, Trichlormethan, Trichlorethan, fluorierte Chloralkane, Dimethylformamid, Dimethylacetamid, Dimethylsulfoxid, N-Methylpyrrolidon oder Tetrahydrofuran, um nur einige Beispiele zu nennen.

Die Abmischung in der Schmelze erfolgt bevorzugt in einer geeigneten Mischvorrichtung, insbesondere einem Extruder. Wesentlich ist, daß keine niedermolekularen Lochleiter bei der Herstellung der Mischungen vorhanden sind. Erfindungsgemäß werden die vorstehend beschriebenen binären Mischungen zur Herstellung von durch elektrische Spannung zum Leuchten anregbaren Bauteilen (Formkörpern) Fasern und/oder Folien verwendet.

Besonders bevorzugt sind elektrolumineszente Vorrichtungen, in denen die vorstehend beschriebenen binären Mischungen zwischen zwei Elektroden eingebracht werden. Nach Anlegen von Spannung erhält man ab einem bestimmten Mindestwert für die Spannung eine Lumineszenz, deren Farbe (Wellenlänge) von der Art des verwendeten Fluoreszenzfarbstoffs abhängt.

Derartige Anordnungen Anode/lumineszierende Mischung/Kathode können nun in einer Vielzahl verschiedener Formen hergestellt werden bzw. in Bauteile beliebiger Struktur eingebracht werden, weshalb die beschriebenen binären Mischungen als elektrolumineszente Materialien eine Vielzahl von Anwendungsmöglichkeiten haben.

Vorteilhaft gegenüber aus dem Stand der Technik bekannten Mehrschichtanordnungen oder ternären Mischungen Farbstoff/Polymer/niedermolekularen Lochleiter ist insbesondere die einfache Herstellbarkeit (und dadurch auch einfache Formgebung) und die verbesserte Langzeitstabilität durch die Abwesenheit von niedermolekularen Lochleitern.

### Beispiele

### Beispiel 1

11,93 mg N,N'-Perylen-3,4,9,10-tetracarbonsäurebis(2',6'-diisopropylphenyl)imid wurden mit 47,70 mg eines Polycarbonats auf der Basis Bisphenol A/Phosgen (Macrolon® 2800 der Bayer AG red. Viskosität = 0,6 dl/g, gemessen in 0,5 gew.-%iger Lösung in Dichlormethan bei 25°C) und 4 ml Chloroform gemischt. Die so erhaltene homogene Lösung wurde mittels Spin-Coating auf eine Indium/Zinn-Oxid (ITO) beschichtete Glasplatte aufgebracht, so daß ein transparenter Film mit einer Dicke von 100 µm erhalten wurde. An der ITO-Schicht und der Polycarbonat/Farbstoff-Schicht wurden Elektroden angebracht, und eine Spannung angelegt, wobei die ITO-Schicht als Anode geschaltet wurde.

Ab einer Schwellspannung von 18 V wurde eine gelbe Lumineszenz mit einen Emissionsmaximum bei 595 nm beobachtet.

### Beispiel 2:

Es wurde wie in Beispiel 1 verfahren, nur anstelle des Farbstoffs in Bsp. 1 11.93 mg 1,6,7,12-Tetraphenoxy-N,N'-perylen-3,4,9,10-tetracarbonsäurebis(2',6 -diisopropylphenyl)imid eingesetzt. Ab einer Schwellspannung von 15 V wurde eine orangefarbene Lumineszenz mit einem Emissionsmaximum bei 618 nm beobachtet.

## Patentansprüche

1. Verwendung von binären Mischungen, bestehend aus einem Fluoreszenzfarbstoff aus der Perylenreihe und einem thermoplastischen Polymeren mit einem Kristallinitätsgrad von weniger als 10 % zur Herstellung eines durch elektrische Spannung zum Leuchten anregbaren Formkörpers, einer Faser oder einer Folie.

2. Verwendung nach Anspruch 1, wobei die Mischungen einen Fluoreszenzfarbstoff auf der Basis von Perylentetracarbonsäure, Benzanthron, Dibenzanthron oder Isodibenzanthron enthalten.

3. Verwendung nach Anspruch 1 oder 2, wobei Fluoreszenzfarbstoffe der allgemeinen Formeln I, II oder III 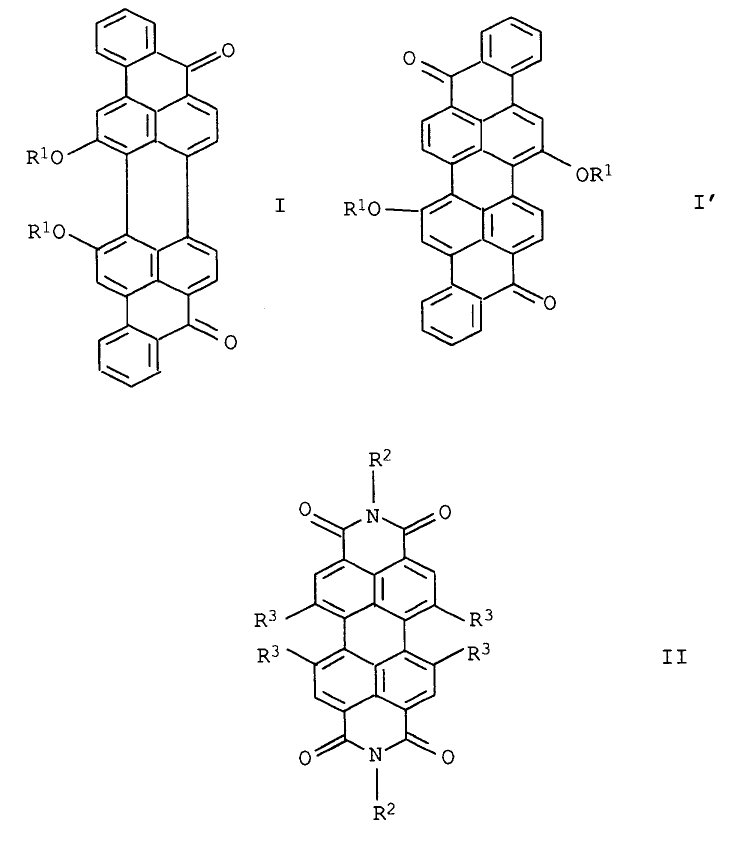 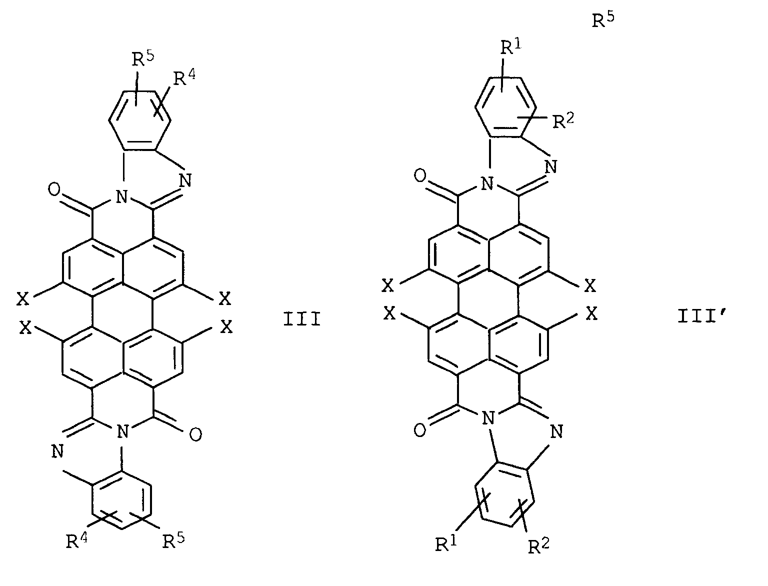 wobei
R¹ C₁-C₁₃-Alkyl, C₁-C₁₃-Acyl, oder SO₂R mit R=Phenyl- oder mit C₁-C₁₃-Alkyl subst. Phenyl
R² C₅-C₂₀-Alkyl, das gegebenenfalls durch ein Sauerstoffatom unterbrochen ist, oder Phenyl, das durch C₁-C₁₃-Alkyl oder C₁-C₁₃-Alkoxy ein- oder mehrfach substituiert ist,
R³ Wasserstoff, Chlor, Phenoxy oder durch Halogen, C₁-C₄-Alkyl oder C₁-C₄-Alkoxy substituiertes Phenoxy,
R⁴ und R⁵ unabhängig voneinander Wasserstoff, C₁-C₂₀-Alkyl-, C₁-C₂₀-Alkoxy oder Phenoxy
und
X Wasserstoff, Halogen oder OR⁶ bedeuten, wobei R⁶ Phenyl oder mit C₁-C₁₃-Alkyl- oder C₁-C₁₃-Alkoxy substituiertes Phenyl darstellt,
bedeuten,
verwendet werden.
